# EUROPÄISCHE PATENTSCHRIFT

(11) **EP 2 820 218 B1**
(45) Veröffentlichungstag und Bekanntmachung des Hinweises auf die Patenterteilung: **31.10.2018**
(21) Anmeldenummer: 13704365.9
(22) Anmeldetag: 14.02.2013
(51) Int. Cl.: E06B 3/22, E06B 3/263, E06B 3/30, E06B 7/14

(54) **VERFAHREN ZUR ERSTELLUNG EINES HOHLKAMMERPROFILS**
METHOD FOR PRODUCING A HOLLOW-CHAMBER PROFILE
PROCÉDÉ DE RÉALISATION D'UN PROFILÉ À CHAMBRE CREUSE

(30) Priorität: 29.02.2012 DE 102012101668
(43) Veröffentlichungstag der Anmeldung: 07.01.2015
(73) Patentinhaber: REHAU AG + Co, 95111 Rehau (DE)
(72) Erfinder: WAGNER, Torsten, 08525 Plauen (DE); TIPPENHAUER, Horst, 91054 Erlangen (DE)
(86) Internationale Anmeldenummer: PCT/EP2013/000429
(87) Internationale Veröffentlichungsnummer: WO 2013/127495

(56) Entgegenhaltungen:
- EP-A2- 1 245 775
- DE-C1- 19 716 556
- DE-U1- 29 811 151
- DE-U1-202004 011 157
- DE-U1-202010 001 301
- DE-U1-202010 007 307
- FR-A1- 2 554 862

## Beschreibung

Die Erfindung betrifft ein Verfahren zur Herstellung eines Fenster- oder Tür-Hohlkammerprofils, wobei im Wege eines Extrusionsverfahrens mindestens ein Hohlprofil hergestellt wird und wobei zusätzlich mindestens ein mit Dämmmaterial ausgeschäumtes Dämmprofil hergestellt wird.

Ein derartiges Verfahren ist beispielsweise aus der DE 20 2010 007 307 U1 bekannt. Das mit formstabilem Polyurethanschaum ausgeschäumte Dämmprofil stellt hierbei ein Verbindungsprofil dar, an das wandseitige Elemente eines Tür- bzw. Fensterprofils angeclipst werden.

Auch die DE 100 06 612 A1 beschreibt ein Verfahren mit den eingangs beschriebenen Merkmalen. In dieser Schrift ist ein Fensterprofil offenbart, welches modular aus einer Vielzahl einzelner Teilprofile zusammengesetzt wird.

Steigende Energiekosten und der Trend hin zu eigenverstärkten Profilen, beispielsweise im Fenster- und / oder Türenbereich, führen dazu, dass Profile immer häufiger inline oder auch offline ausgeschäumt und/oder verstärkt werden. Das Inline-Ausschäumen, wie es beispielsweise in der WO 2009/062986 A1 sowie der DE 197 31 163 A1 beschrieben ist, ist jedoch verfahrenstechnisch sehr aufwendig und teuer. Darüber hinaus ist die Qualität der damit erhaltenen Ausschäumung aufgrund der Komplexität der herzustellenden Hohlkammerproflie häufig unbefriedigend. Dies führt in der Praxis dazu, dass meist nur vergleichsweise einfache Profilraumformen - idealerweise ohne Innenstege - inline ausgeschäumt werden. Innenstege werden jedoch häufig benötigt, um bestimmte Funktionen zu erfüllen. So werden beispielsweise Innenstege zur Definierung eines inneren Hohlraums benötigt, um bei Fensterprofilen eine einwandfreie Entwässerung zu ermöglichen. Beim Einsatz von Verstärkungsbändern, welche beispielsweise aus Aluminium oder auch aus faserverstärktem Kunststoffmaterial besteht können, ist es gerade bei unsymmetrischen Profilraumformen häufig schwierig, die Verstärkungen so einzubringen, dass eine verzugsfreie Extrusion möglich ist.

Die DE 298 11 151 U1 offenbart ein Verfahren mit den Merkmalen des Oberbegriffs des Patentanspruches 1. Ferner ist aus der DE 197 16 556 C1 eine teilweise ausgeschäumte Rahmenverkleidung zur Wärmeisolation von Fenstern und Türen bekannt.

Der Erfindung liegt die Aufgabe zugrunde, ein verstärktes und / oder geschäumtes Hohlkammerprofil anzugeben, welches die vorgegebenen konstruktiven Anforderungen erfüllt und dabei gleichzeitig kostengünstig herstellbar ist.

Diese Aufgabe wird gelöst durch die Merkmale des Patentanspruchs 1.

Erfindungsgemäß bildet das Dämmprofil die gesamte Außenfläche des Hohlkammerprofils. Zweckmäßigerweise werden hierbei das Hohlprofil und das Dämmprofil inline formschlüssig miteinander verbunden. Die Verbindung erfolgt durch Rasten.

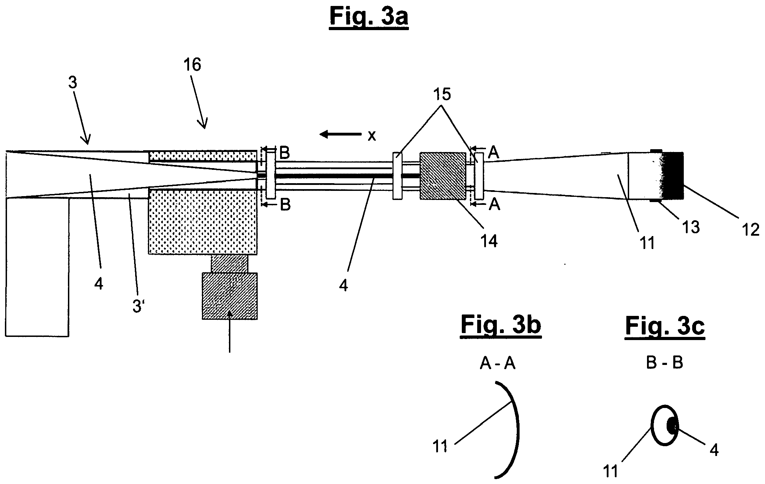

Gemäß einer bevorzugten Ausführungsform der Erfindung erfolgt die Ausschäumung des Dämmprofils kontinuierlich im Rahmen einer Extrusion des Dämmprofils. Aufgrund der einfachen Geometrie des Dämmprofils ist eine kontinuierliche Ausschäumung desselben inline unmittelbar nach dessen Extrusion problemlos möglich. Die Ausschäumung kann beispielsweise mittels eines so genannten Folieneinzugsverfahrens erfolgen, welches nachfolgend im Ausführungsbeispiel in den Figuren 3 a) bis 3 c) ausführlich beschrieben wird.

Im Rahmen der Erfindung liegt es ferner, dass das Hohlprofil ebenfalls mit Dämmmaterial ausgeschäumt wird. Das Hohlprofil kann hierbei ebenfalls zumindest einen Teil der Innenfläche des Hohlkammerprofils bilden. Erfindungsgemäß wird beim Zusammensetzen von Hohlprofil und Dämmprofil zum Hohlkammerprofil eine zusätzliche Hohlkammer gebildet, welche zur Entwässerung des Hohlkammerprofils dient. Auf diese Weise ist es möglich, kostengünstig ein mit einer sehr guten Wärmedämmung ausgestattetes Fensterprofil bereitzustellen, bei dem eine definierte Geometrie des funktionstechnisch benötigten Entwässerungskanals des Hohlkammerprofils gewährleistet ist. Hierbei ist zu berücksichtigen, dass beispielsweise beim Schäumvorgang große Kräfte entstehen, welche zu einer Verformung von Innenstegen des Hohlkammerprofils führen können. Bei der erfindungsgemäßen Lehre hingegen wird die innere, zur Entwässerung dienende Hohlkammer des Hohlkammerprofils durch jeweils eine Außenwand des Hohlprofil einerseits und des Dämmprofils andererseits gebildet, so dass hier trotz Ausschäumung des Dämmprofils und ggf. zusätzlich des Hohlprofils eine hohe Fertigungsgenauigkeit hinsichtlich Geometrie der zusätzlichen Hohlkammer sichergestellt werden kann. Zweckmäßigerweise weist die zusätzliche Hohlkammer eine Breite von mindestens 2 mm, z.B. mindestens 3 mm, vorzugsweise mindestens 5 mm auf. Hierdurch ist eine problemlose Entwässerung gewährleistet.

Vorzugsweise wird das Dämmprofil, und vorzugsweise auch das Hohlprofil, mit mindestens einem Armierungsband versehen. Dieses Armierungsband kann aus Metall, zum Beispiel Aluminium oder Stahl oder aber auch aus einem organischen Material bestehen, zum Beispiel einem faserverstärkten Kunststoff. Im Rahmen der Erfindung liegt es insbesondere, dass das Armierungsband als thermoplastisches Prepreg, insbesondere als Organoblech, ausgebildet ist. Das Organoblech kann Endlosfasern aufweisen, die zum Beispiel unidirektional in Bandrichtung ausgerichtet oder aber auch beispielsweise als Gewebe ausgebildet sind. Alternativ ist auch der Einsatz eines duroplastischen Prepregs denkbar. Als Fasern kommen insbesondere Kohlenstoff- und / oder Glasfasern zum Einsatz.

Das Hohlprofil und / oder das Dämmprofil können bereichsweise oder vollständig aus faserverstärktem Kunststoff bestehen. Zweckmäßigerweise ist das Dämmmaterial als Schaummaterial ausgebildet und besteht vorzugsweise aus einem organischen Material mit niedriger Wärmeleitfähigkeit, insbesondere Polystyrol, Polyvinylchlorid, Polyethylen, Polyurethan oder Mischungen zweier oder mehr der genannten Materialien.

Im Rahmen der Erfindung liegt es auch, dass das Dämmprofil als Dämmrahmen ausgebildet wird, welcher die vollständige Außenseite des Hohlkammerprofils bildet. Dieser Dämmrahmen kann aus Metall, zum Beispiel Aluminium oder Edelstahl, oder einem witterungsbeständigen Kunststoff hergestellt werden. Beim erfindungsgemäßen Einsatz des Hohlkammerprofils als Tür oder / Fenster, bildet der Dämmrahmen die Außenseite der Tür bzw. des Fensters und stellt neben einer ansprechenden Optik eine sehr gute Wärmedämmung bereits an der Außenseite des Hohlkammerprofils sicher. Zur Verringerung der Wärmedehnung kann das Dämmmaterial mit Fasern versehen sein. Im Rahmen der Erfindung liegt es auch, dass der Dämmrahmen aus einer Folie, beispielsweise einer Metallfolie aus Edelstahl oder gepulvertem Aluminium besteht. Es kann sinnvoll sein, die Verbindung zwischen dem Hohlprofil und dem Dämmprofil bzw. Dämmrahmen biege- und / oder schubweich auszuführen. Hierdurch kann bei Temperaturänderungen der unterschiedlichen Wärmeausdehnung von Hohlprofil einerseits und Dämmprofil andererseits Rechnung getragen werden, so dass keine hohen Spannungen entstehen. Zweckmäßigerweise wird der ausgeschäumte Dämmrahmen über das Dämmmaterial mit dem Hohlprofil verbunden, z.B. verklebt. Von Vorteil ist insbesondere, wenn die Bautiefe des Dämmrahmens der Bautiefe des Hohlprofils entspricht, da der Profil-Verarbeiter (z.B. Fenster- oder Türenhersteller) in diesem Fall den Dämmrahmen ergänzen kann, ohne dass er seine Fertigung umstellen muss. Im Rahmen der Erfindung liegt es ferner, dass die Dämmschale mit einer oder mehreren Dichtfahnen versehen wird.

Gegenstand der Erfindung ist auch ein Hohlkammerprofil gemäß Anspruch 11.

Im Folgenden wird die Erfindung anhand einer lediglich ein Ausführungsbeispiel darstellenden Zeichnung ausführlich erläutert. Es zeigen schematisch:
- Figur 1: ein erfindungsgemäß hergestelltes Hohlkammerprofil,
- Figuren 2 a) bis 2 d): schematische, stark vereinfachte Darstellungen von Hohlkammerprofilen, wobei in den Figuren 2b) und 2c) nicht zur Erfindung gehörende Hohlkammerprofile dargestellt sind,
- Figuren 3 a) bis 3 c): ein erfindungsgemäßes Verfahren zur Inline-Einbringung von Dämmmaterial in ein Dämmprofil,
- Figur 4: ein alternatives Verfahren zur Inline-Einbringung von Dämmmaterial in ein Dämmprofil und
- Figur 5: ein nicht zur Erfindung gehörendes Hohlkammerprofil.

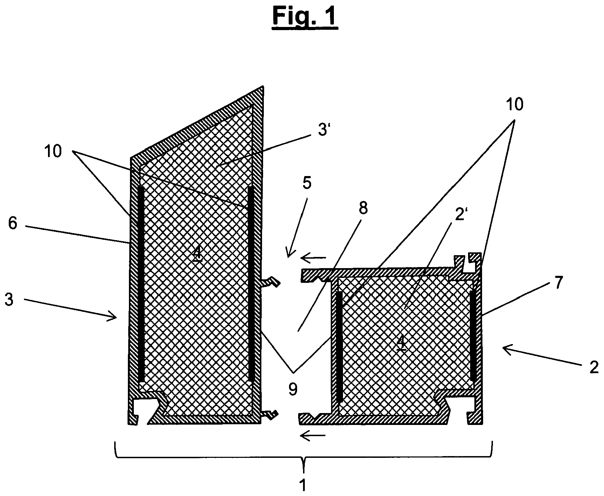

Figur 1 zeigt ein erfindungsgemäß hergestelltes Fenster- oder Tür-Hohlkammerprofil 1. Bei diesem Profil 1 wurde im Wege eines Extrusionsverfahrens ein Kunststoff-Hohlprofil 2 mit einer Hohlkammer 2' hergestellt. Zusätzlich erfolgte die Extrusion eines Kunststoff-Dämmprofils 3, dessen Hohlkammer 3' mit Dämmmaterial 4 ausgeschäumt wurde. Im Ausführungsbeispiel gemäß Fig. 1 wurde die Hohlkammer 2' des Hohlprofils 2 - analog zum Dämmprofil 3 - ebenfalls mit Dämmmaterial 4 ausgeschäumt. Das Hohlprofil 2 und das Dämmprofil 3 werden durch eine mechanische Rastverbindung 5 zum erfindungsgemäßen Hohlkammerprofil 1 zusammengesetzt. Das Dämmprofil 3 bildet hierbei die der Witterung ausgesetzte Außenfläche 6 des Hohlkammerprofils 1, während das Hohlprofil 2 die dem Gebäudeinneren zugewandte Innenfläche 7 des Hohlkammerprofils 1 bildet. Beim Zusammensetzen von Hohlprofil 2 und Dämmprofil 3 zum Hohlkammerprofil 1 wird eine zusätzliche Hohlkammer 8 gebildet, welche zur Entwässerung des Hohlkammerprofils 1 dient. Diese Hohlkammer 8 weist aufgrund des geometrisch einfach gestalteten und daher vergleichsweise leicht inline ausschäumbaren Hohlprofils 2 bzw. Dämmprofils 3 präzise gestaltete Wandungen 9 auf, so dass die Entwässerungsfunktion sicher gewährleistet ist. Der Figur 1 ist ferner zu entnehmen, dass das Dämmprofil 3 und auch das Hohlprofil 2 jeweils mit zwei Armierungsbändern 10 versehen sind. Diese bestehen im Ausführungsbeispiel aus einem faserverstärkten Kunststoff, vorzugsweise einem Organoblech. Die Armierungsbänder 10 laufen vorzugsweise online in die Extrusionsvorrichtungen zur Herstellung des Dämmprofils 3 bzw. Hohlprofils 2 ein. Im Rahmen der Erfindung liegt es ferner, dass das Dämmprofil 3 und / oder das Hohlprofil 2 bereichsweise oder vollständig aus faserverstärktem Kunststoff bestehen. Das Dämmmaterial 4 besteht aus Polyurethanschaum. Die Rastverbindung 5 zwischen Hohlprofil 2 und Dämmprofil 3 kann schubweich ausgebildet sein, so dass aufgrund unterschiedlicher Wärmeausdehnung von Hohlprofil 2 einerseits und Dämmprofil 3 ein entsprechender Ausgleich in Profillängsrichtung (also in Fig. 1 in die Zeichenebene hinein bzw. aus dieser heraus) erfolgen kann. Dieser schubweiche Verbund kann insbesondere bei großen Bautiefen erforderlich sein, um das Hohlkammerprofil 1 vor einer zu großen Deformation zu schützen. Das die Außenfläche 6 bildende Dämmprofil 3 ist einer wesentlich größeren Temperaturschwankung ausgesetzt als das die Innenfläche 7 bildende Hohlprofil 2, so dass die Wärmedehnung beim Dämmprofil 3 deutlich größer als beim Hohlprofil 2 ist. In diesem Zusammenhang kann es auch zweckmäßig sein, das Dämmprofil 3 und/oder das Hohlprofil 2 mittels eines Coextrusionsverfahrens herzustellen, so dass der Bereich der Rastverbindung 5 aus einem sich vom Rest des Profils 2 bzw. 3 unterscheidenden Material besteht, welches eine gegenüber dem Profil-Hauptmaterial reduzierte Härte aufweist und damit die gewünschte schubweiche Verbindung ermöglicht.

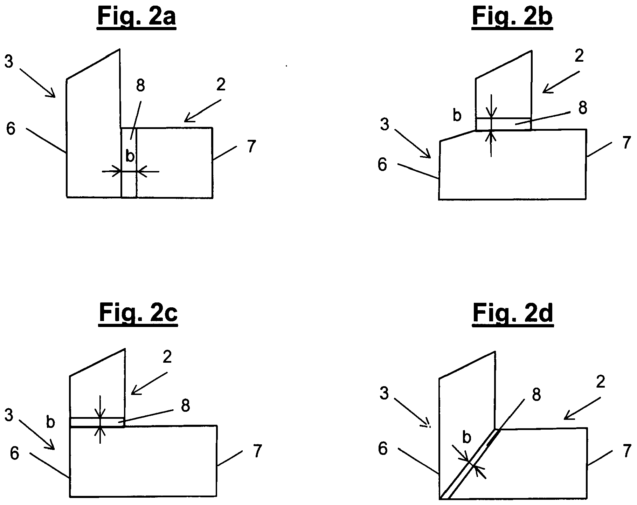

In Figur 2 a) ist das in Figur 1 gezeigte Profil 1 schematisch stark vereinfacht noch einmal dargestellt. Die in der Mitte befindliche zusätzliche Hohlkammer 8 weist eine Breite b von mindestens 5 mm auf, so dass eine ordnungsgemäße Entwässerung sicher gewährleistet ist. In den Figuren 2b) und 2c) sind nicht zur Erfindung gehörende Hohlkammerprofile dargestellt. Die Figur 2 d) zeigt eine alternative Ausführungsform der Erfindung, wobei auch hier sowohl das Dämmprofil 3 als auch das Hohlprofil 2 jeweils ausgeschäumt ausgebildet sein können. Ferner ist auch in diesem Ausführungsbeispiel das Dämmprofil 3 und optional auch das Hohlprofil 2 mit jeweils mindestens einem Armierungsband 10 versehen. Die zusätzliche Hohlkammer 8 wird jeweils beim Zusammensetzen der beiden Profile gebildet und befindet sich folglich zwischen den beiden Profilen 2, 3. In der nicht zur Erfindung gehörenden Ausführungsform gemäß Fig. 2 b) bildet das Dämmprofil 3 sowohl die Innenfläche 7 als auch die Außenfläche 6 des Hohlkammerprofils 1 und das Hohlprofil 2 ist auf das Dämmprofil 3 aufgesetzt. In der ebenfalls nicht zur Erfindung gehörenden Fig. 2 c) wird die Außenfläche 6 des Hohlkammerprofils 1 gemeinsam von Dämmprofil 3 und Hohlprofil 2 gebildet, während die Innenfläche 7 allein vom Dämmprofil 3 gebildet wird. In Fig. 2 d) sind die beiden Profile 2, 3 schräg miteinander verbunden und das Dämmprofil 3 bildet die Außenfläche 6, das Hohlprofil 2 hingegen die Innenfläche 7 des Hohlkammerprofils 1. In der Figur 2 a) ist die den Entwässerungskanal bildende zusätzliche Hohlkammer 8 senkrecht, in den Figuren 2 b) und 2 c) horizontal und in der Figur 2 d) schräg ausgerichtet.

Die Figuren 3 a) bis 3 c) zeigen ein Verfahren zur Inline-Ausschäumung eines Dämmprofils 3. Bei diesem Verfahren ist zwischen Dämmprofilwandung und Dämmmaterial 4 eine Zwischenschicht 11 vorgesehen, die entsprechend der Wandung des auszuschäumenden Dämmprofils 3 geformt wird und im Ausführungsbeispiel als Folienstreifen ausgebildet ist. Das Dämmmaterial 4 wird auf den Folienstreifen 11 aufgebracht, welcher von einer Rolle 12 in Extrusionsrichtung x abgezogen wird. Die Rolle 12 ist auf einer Abrollvorrichtung 13 angeordnet, die einen automatischen Folienwechsel erlaubt. Anschließend wird der mit dem Dämmmaterial 4 versehene Folienstreifen 11 in die Hohlkammer 3' des Dämmprofils 3 eingezogen. Der Folienstreifen 11 wurde zu Beginn des Fertigungsverfahrens mit dem Dämmprofil 3 verbunden, so dass ein selbsttätiges Einziehen der mit dem Dämmmaterial 4 versehenen Folie 11 in die Hohlkammer 3' des Dämmprofils 3 mit Profillaufgeschwindigkeit erfolgt. Nach dem Einzug des Folienstreifens 11 in das Dämmprofil 3 kommt es zum Aufschäumen und Aushärten des Dämmmaterials 4. Bevor das Dämmmaterial 4 mittels eines Mischkopfes 14 auf den bahnförmigen Folienstreifen 11 aufgetragen wird, wird dieser zunächst mittels einer Führungseinrichtung 15 in eine Rinnenform gebracht (siehe Schnitt A-A gemäß Figur 3 b). Danach wird der Folienstreifen 11 zur Düse des Extrusionswerkzeugs 16 hin mittels einer weiteren Führungseinrichtung 15 derart weiterverformt, dass er im Querschnitt gesehen eine geschlossene Kontur aufweist, welche das Dämmmaterial 4 vollständig umhüllt (siehe Schnitt B-B gemäß Figur 3 c) und durch die entsprechende Düsenbohrung passt. Die Führung im Extrusionswerkzeug 16 ist separat gekühlt, um ein Aufheizen des Folienstreifens 11 zu vermeiden. Außerdem kann die Führung im Havariefall, also zum Beispiel bei komplett ausgeschäumter Führung, einfach aus der Düse entnommen werden. Das ausgeschäumte Dämmprofil 3 kann nunmehr mit einem parallel hierzu in einer separaten Strecke extrudierten Hohlprofil 2 (welches ggf. analog ausgeschäumt wird) online mittels einer Rastverbindung 5 zum Hohlkammerprofil 1 zusammengeführt werden, wie in Fig. 1 dargestellt.

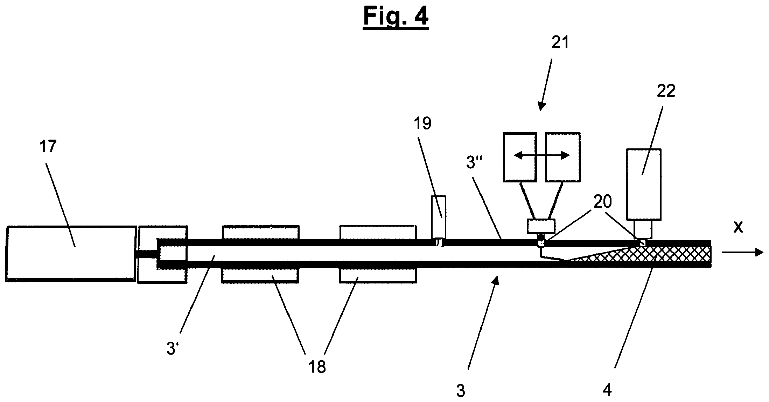

Die Figur 4 zeigt ein weiteres Inline-Verfahren zur Einbringung von Dämmmaterial 4 in ein Dämmprofil 3. Zunächst erfolgt in einem Extruder 17 im Wege eines Extrusionsverfahrens die Formgebung des Dämmprofils 3, welches aus Kunststoff, vorzugsweise Hart-PVC, besteht. Der Kunststoff kann bereichsweise mit Glasfasern verstärkt sein, so dass insgesamt eine Stahlarmierung des Hohlkammerprofils 1 nicht erforderlich ist. Nach der Formgebung wird das Dämmprofil 3 zunächst mithilfe eines Kalibers 18 kalibriert, um die Produktmaße des Profils zu fixieren. Danach werden mithilfe einer Öffnungserzeugungseinrichtung 19 im Rahmen des kontinuierlichen Fertigungsverfahrens in einer Außenwandung 3" der mit Dämmmaterial 4 zu befüllenden Hohlkammer 3' des Dämmprofils 3 in bestimmten, vorzugsweise äquidistanten, Abständen Öffnungen 20 eingebracht. Diese werden spanlos - mechanisch oder thermisch - erzeugt, wobei die Öffnungserzeugungseinrichtung 19 zum Beispiel als Stanzwerkzeug oder aber auch als Laser ausgebildet sein kann. Danach wird ebenfalls im Rahmen des kontinuierlichen Fertigungsverfahrens mittels einer in Extrusionsrichtung x mitgeführten Vorrichtung 21 das Dämmmaterial 4 durch die Öffnung 20 in die zu befüllende Hohlkammer 3' des Dämmprofils 3 eingebracht. Das eingebrachte Dämmmaterial 4 besteht aus einem organischen Material mit niedriger Wärmeleitfähigkeit, beispielsweise Polystyrol, Polyvinylchlorid, Polyethylen oder Polyurethan. Zweckmäßigerweise erfolgt der Schäumvorgang zeitversetzt erst nach der Einbringung des Dämmmaterials 4 in die Hohlkammer 3' durch eine chemische Reaktion (z.B. PUR-Schaumbildung). Unmittelbar nach der Einbringung des Dämmmaterials 4 werden die Öffnungen 20 mithilfe einer Verschlussvorrichtung 22 verschlossen, z.B. mit einer Kappe oder durch Aufbringung von Heißkleber (nicht näher dargestellt). Dieses Verschließen erfolgt ebenfalls online innerhalb des kontinuierlichen Fertigungsverfahrens. Die Öffnungen 20 werden an einer Nicht-Sichtfläche des Dämmprofils 3 erzeugt, um dessen optisches Erscheinungsbild nicht zu beeinträchtigen. Die Vorrichtung 21 zur Einbringung von Dämmmaterial 4 weist eine (nicht näher dargestellte) Einrichtung auf, die eine Mitführung der Vorrichtung 21 parallel zur Extrusionsrichtung x sicherstellt. Dabei kann die Einrichtung beispielsweise in einer ortsfesten, parallel zur Extrusionsrichtung x verlaufenden Schiene verlaufen, und / oder in die Öffnung 20 eingehakt werden. Sobald ein der jeweiligen Öffnung 20 zugewiesener Bereich der Hohlkammer 3' ausgeschäumt ist, fährt die Vorrichtung 21 entgegen der Extrusionsrichtung x wieder zurück und geht zur Befüllung des nächsten Hohlkammerbereiches über die nächste Öffnung 20 über. Analog zum Ausführungsbeispiel gemäß Fig. 3 kann das ausgeschäumte Dämmprofil 3 nunmehr wiederum mit einem parallel hierzu in einer separaten Strecke extrudierten Hohlprofil 2 (welches ggf. analog ausgeschäumt wird) online zum Hohlkammerprofil 1 verbunden werden.

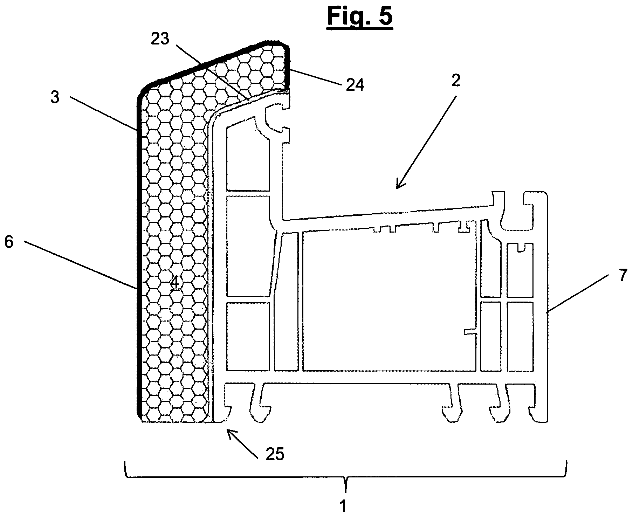

Beim nicht zur Erfindung gehörenden Ausführungsbeispiel gemäß Figur 5 ist das Dämmprofil 3 als Dämmrahmen ausgebildet, welcher die vollständige Außenseite des Hohlkammerprofils 1 bildet. Dieser Dämmrahmen 3 ist im Ausführungsbeispiel als Metallschale aus Aluminium ausgebildet. Alternativ ist beispielsweise auch der Einsatz eines wettbeständigen Kunststoffs denkbar, zum Beispiel PVC oder ABS. Der Dämmrahmen 3 kann in diesem Fall zumindest bereichsweise faserverstärkt ausgebildet sein. Zur Verringerung der Wärmedehnung ist in Figur 5 das Dämmmaterial 4 mit Fasern versehen. Der Dämmrahmen 3 ist mit Dämmmaterial 4 ausgeschäumt und über das Dämmmaterial 4 mit dem Hohlprofil 2 über eine Klebstoffschicht 23 verbunden. Der Dämmrahmen 3 schließt an seiner Innenseite 24 bündig mit dem Hohlprofil 2 ab. Auch an der Unterseite 25 des Hohlprofils 2 schließt der Dämmrahmen 3 bündig mit dem Hohlprofil 2 ab. Hierdurch kann der Verarbeiter die Fertigung des Dämmrahmens 3 in seinen Produktionsprozess integrieren, ohne dass er seine Fertigung umstellen muss.

## Patentansprüche

1. Verfahren zur Herstellung eines Fenster- oder Tür-Hohlkammerprofils (1),
- wobei im Wege eines Extrusionsverfahrens mindestens ein Hohlprofil (2) hergestellt wird,
- wobei zusätzlich mindestens ein mit Dämmmaterial (4) ausgeschäumtes Dämmprofil (3) hergestellt wird,
- wobei anschließend das Hohlprofil (2) und das Dämmprofil (3) durch eine mechanische Rastverbindung (5) zum Hohlkammerprofil (1) zusammengesetzt und hierbei miteinander verbunden werden,
- wobei das Dämmprofil (3) die gesamte der Witterung ausgesetzte Außenfläche (6) des Hohlkammerprofils (1) bildet, **dadurch gekennzeichnet, dass** beim Zusammensetzen von Hohlprofil (2) und Dämmprofil (3) zum Hohlkammerprofil (1) eine zwischen dem Hohlprofil (2) und dem Dämmprofil (3) befindliche, zusätzliche Hohlkammer (8) gebildet wird, welche zur Entwässerung des Hohlkammerprofils (1) dient.

2. Verfahren nach Anspruch 1, **dadurch gekennzeichnet, dass** das Hohlprofil (2) und das Dämmprofil (3), vorzugsweise inline, form- und / oder kraft- und / oder stoffschlüssig miteinander verbunden werden.

3. Verfahren nach Anspruch 1 oder 2, **dadurch gekennzeichnet, dass** die Ausschäumung des Dämmprofils (3) kontinuierlich im Rahmen einer Extrusion des Dämmprofils (3) erfolgt.

4. Verfahren nach einem der Ansprüche 1-3, **dadurch gekennzeichnet, dass** das Hohlprofil (2) ebenfalls mit Dämmmaterial (4) ausgeschäumt wird.

5. Verfahren nach einem der Ansprüche 1-4, **dadurch gekennzeichnet, dass** die zusätzliche Hohlkammer (8) eine Breite von mindestens 2 mm, vorzugsweise mindestens 5 mm, aufweist.

6. Verfahren nach einem der Ansprüche 1-5, **dadurch gekennzeichnet, dass** das Dämmprofil (3) und/oder das Hohlprofil (2) mit mindestens einem Armierungsband (10) versehen wird.

7. Verfahren nach einem der Ansprüche 1-6, **dadurch gekennzeichnet, dass** das Hohlprofil (2) und / oder das Dämmprofil (3) bereichsweise oder vollständig aus faserverstärktem Kunststoff besteht.

8. Verfahren nach einem der Ansprüche 1-7, **dadurch gekennzeichnet, dass** das Dämmmaterial (4) aus einem organischen Material mit niedriger Wärmeleitfähigkeit, insbesondere Polystyrol, Polyvinylchlorid, Polyethylen, Polyurethan oder Mischungen zweier oder mehr der genannten Materialien besteht.

9. Verfahren nach einem der Ansprüche 1-8, **dadurch gekennzeichnet, dass** zur Verringerung der Wärmedehnung das Dämmmaterial (4) mit Fasern versehen wird.

10. Verfahren nach einem der Ansprüche 1-9, **dadurch gekennzeichnet, dass** die Verbindung zwischen dem Hohlprofil (2) und dem Dämmprofil (3) biege- und / oder schubweich ausgeführt wird.

11. Fenster- oder Tür-Hohlkammerprofil (1), hergestellt nach einem Verfahren gemäß einem der Ansprüche 1-10.

## Claims

1. A method for producing a window or door hollow-chamber profile (1),
- wherein at least one hollow profile (2) is produced by means of an extrusion process,
- wherein furthermore at least one insulating profile (3) filled with foam insulating material (4) is produced,
- wherein said hollow profile (2) and said insulating profile (3) are then combined by means of a mechanical latching connection (5) to form said hollow-chamber profile (1), thereby being connected to each other,
- wherein said insulating profile (3) forms the entire outer surface (6) of said hollow-chamber profile (1) which is exposed to weathering, **characterised in that** on combining hollow profile (2) and insulating profile (3) to form said hollow-chamber profile (1) an additional hollow chamber (8) located between said hollow profile (2) and said insulating profile (3) is formed, which serves to remove water from said hollow-chamber profile (1).

2. The method according to claim 1, **characterised in that** the hollow profile (2) and the insulating profile (3) are connected to each other preferably inline, positively and/or non-positively and/or by a material bond.

3. The method according to claim 1 or 2, **characterised in that** the foam filling of the insulating profile (3) takes place continuously during extrusion of said insulating profile (3).

4. The method according to one of claims 1-3, **characterised in that** the hollow profile (2) is likewise filled with foam insulating material (4).

5. The method according to one of claims 1-4, **characterised in that** the additional hollow chamber (8) has a width of at least 2 mm and preferably at least 5 mm.

6. The method according to one of claims 1-5, **characterised in that** the insulating profile (3) and/or the hollow profile (2) is provided with at least one reinforcing strip (10).

7. The method according to one of claims 1-6, **characterised in that** the hollow profile (2) and/or the insulating profile (3) consist(s) in some regions or entirely of fibre-reinforced plastic.

8. The method according to one of claims 1-7, **characterised in that** the insulating material (4) consists of an organic material with low thermal conductivity, in particular polystyrene, polyvinyl chloride, polyethylene, polyurethane or mixtures of two or more of the aforesaid materials.

9. The method according to one of claims 1-8, **characterised in that** the insulating material (4) is provided with fibres to reduce thermal expansion.

10. The method according to one of claims 1-9, **characterised in that** the connection between the hollow profile (2) and the insulating profile (3) is designed to be flexible and/or to have low shear resistance.

11. A window or door hollow-chamber profile (1), produced by a method according to one of claims 1-10.

## Revendications

1. Procédé de fabrication d'un profilé à chambre creuse (1) pour fenêtre ou porte,
- au moins un profilé creux (2) étant fabriqué au cours d'un procédé d'extrusion,
- au moins un profilé isolant (3) expansé avec un matériau isolant (4) étant fabriqué en plus,
- le profilé creux (2) et le profilé isolant (3) étant ensuite assemblés au moyen d'une liaison par enclenchement mécanique pour obtenir le profilé à chambre creuse (1) et, de cette façon, étant reliés entre eux,
- le profilé isolant (3) formant la surface extérieure (6) totale du profilé à chambre creuse (1), exposée aux intempéries, **caractérisé en ce que** lors de l'assemblage du profilé creux (2) et du profilé isolant (3) pour obtenir le profilé à chambre creuse (1), une chambre creuse supplémentaire (8) située entre le profilé creux (2) et le profilé isolant (3) est formée, laquelle sert à drainer le profilé à chambre creuse (1).

2. Procédé selon la revendication 1, **caractérisé en ce que** le profilé creux (2) et le profilé isolant (3) sont reliés entre eux de préférence en ligne, par adhérence de forme et/ou de force et/ou de matière.

3. Procédé selon la revendication 1 ou 2, **caractérisé en ce que** le moussage du profilé isolant (3) est réalisé de manière continue dans le cadre d'une extrusion du profilé isolant (3).

4. Procédé selon l'une quelconque des revendications 1 à 3, **caractérisé en ce que** le profilé creux (2) est également expansé avec du matériau isolant (4).

5. Procédé selon l'une quelconque des revendications 1 à 4, **caractérisé en ce que** la chambre creuse supplémentaire (8) présente une largeur d'au moins 2 mm, de préférence d'au moins 5 mm.

6. Procédé selon l'une quelconque des revendications 1 à 5, **caractérisé en ce que** le profilé isolant (3) et/ou le profilé creux (2) sont munis d'au moins une bande de renforcement (10).

7. Procédé selon l'une quelconque des revendications 1 à 6, **caractérisé en ce que** le profilé creux (2) et/ou le profilé isolant (3) sont constitués par endroits ou entièrement de matière plastique renforcée par fibres.

8. Procédé selon l'une quelconque des revendications 1 à 7, **caractérisé en ce que** le matériau isolant (4) est constitué d'une matière organique à faible conductibilité thermique, notamment de polystyrène, de chlorure de polyvinyle, de polyéthylène, de polyuréthanne ou de mélanges de deux ou de plus des matières mentionnées.

9. Procédé selon l'une quelconque des revendications 1 à 8, **caractérisé en ce que** le matériau isolant (4) est muni de fibres afin de réduire la dilatation thermique.

10. Procédé selon l'une quelconque des revendications 1 à 9, **caractérisé en ce que** la liaison entre le profilé creux (2) et le profilé isolant (3) est réalisée de manière flexible et/ou souple.

11. Profilé à chambre creuse (1), pour fenêtre ou porte, fabriqué suivant un procédé selon l'une quelconque des revendications 1 à 10.
